# EUROPÄISCHE PATENTSCHRIFT

(11) **EP 1 807 241 B1**
(45) Veröffentlichungstag und Bekanntmachung des Hinweises auf die Patenterteilung: **03.09.2008**
(21) Anmeldenummer: 05733900.4
(22) Anmeldetag: 21.04.2005
(51) Int. Cl.: B23Q 7/14, B23Q 41/02

(54) **FLEXIBLE FERTIGUNGSLINIE ZUM BEARBEITEN VON GLEICHARTIGEN WERKSTÜCKEN**
FLEXIBLE PRODUCTION LINE FOR MACHINING SIMILAR WORKPIECES
CHAINE DE PRODUCTION FLEXIBLE POUR LE TRAITEMENT DE PIECES DE MEME TYPE

(30) Priorität: 21.09.2004 DE 102004045750
(43) Veröffentlichungstag der Anmeldung: 18.07.2007
(73) Patentinhaber: NILES-SIMMONS Industrieanlagen GmbH, 09117 Chemnitz (DE)
(72) Erfinder: NAUMANN, Hans, J., Albany, NY 12204 (US); HABERKORN, Rainer, 09117 Chemnitz (DE)
(74) Vertreter: Grättinger & Partner (GbR)
(86) Internationale Anmeldenummer: PCT/EP2005/004303
(87) Internationale Veröffentlichungsnummer: WO 2006/032306

(56) Entgegenhaltungen:
- EP-A- 1 125 678
- DE-A1- 10 253 224
- DE-A1- 19 531 522
- DE-A1- 19 849 374
- US-A1- 2002 148 704

## Beschreibung

Die Erfindung betrifft eine Fertigungslinie zum Bearbeiten von gleichartigen Werkstücken in mehreren Bearbeitungsoperationen, wobei mehrere Werkstücke desselben Typs nachdem sie jeweils mit einem individuellen Identifikationsmerkmal versehen wurden, auf einem einzelnen von mehreren adressierbaren Werkstückträgern abgelegt sind.

Die Fertigungslinie ist für die Bearbeitung von Kurbelwellen für kleinere bis mittelgroße Verbrennungsmotoren vorgesehen. Die Fertigungslinie zeichnet sich durch eine besonders hohe Flexibilität aus. Die Fertigungslinie ist darüber hinaus auch dazu vorgesehen, in bereits bestehende Fertigungslinien integriert zu werden.

Eine Fertigungslinie dieser Art ist beispielsweise aus DE 102 53 224 A1 der Anmelderin bekannt. Bei der bekannten flexiblen Fertigungslinie ist jeder Produktionseinheit eine Aufnahme- und Übergabeeinrichtung für Werkstückträger zugeordnet, welche von einem Regalbediengerät bedient wird. Das Regalbediengerät fördert einzelne Werkstückträger zwischen einer Aufnahme- und Übergabeeinrichtung der Produktionseinheiten und einem Regalspeicher hin und her. Die Werkstückträger sind adressierbar, so dass der jeweilige Standort im Regalspeicher vom Regalbediengerät abgelesen werden kann. Die Ablage der Werkstückträger innerhalb des Regalspeichers erfolgt regellos. Das Regalbediengerät merkt sich allerdings mit Hilfe eines Bordcomputers oder eines externen Leitrechners, der seine Bewegungen überwacht, steuert und speichert, die Adresse eines jeden Werkstückträgers und den Ort, wo es den Werkstückträger im Regalspeicher abgelegt hat. Als Werkstückträger dienen Paletten, auf denen jeweils mehrere Kurbelwellen desselben Typs abgelegt sind. Dabei ist vorgesehen, dass Kurbelwellen unterschiedlichen Typs gleichzeitig auf der flexiblen Fertigungslinie bearbeitet werden können.

Bei der flexiblen Kurbelwellenfertigung kommt es besonders an auf
- die schnelle Umrüstbarkeit der Produktionslinie,
- die Bearbeitungsmöglichkeit vieler Kurbelwellentypen auf ein und derselben Anlage,
- einen hohen Wirkungsgrad der Anlage und
- die Vernetzung von Produktions- und Messanlagen zur Produktionssteuerung.

In diesem Sinne wird im Rahmen der vorliegenden Beschreibung der Begriff "Produktionseinheit" dahingehend definiert, dass sie neben der bereits erwähnten Aufnahme- und Übergabeeinrichtung mindestens eine Maschine zum Durchführen einer vorbestimmten Bearbeitungsoperation an einer Kurbelwelle und gegebenenfalls noch eine Messeinrichtung zum Prüfen der Qualität der durchgeführten Bearbeitungsoperation aufweist. Nicht jeder Maschine muss allerdings auch zugleich eine Messeinrichtung zugeordnet sein. Die gemeinsame Zuordnung von Maschine und Messeinrichtung ist auf bestimmte Bearbeitungsoperationen beschränkt. Hinzu kommt in jedem Fall noch ein Maschinenportal, das einzelne Kurbelwellen aus dem Werkstückträger entnimmt, der Maschine zuführt und nach Durchführung der Bearbeitungsoperation wieder auf dem Werkstückträger ablegt.

Die Erfindung geht von der Aufgabenstellung an Produktionsanlagen für Kurbelwellen oder gleichartige Werkstücke aus, wonach diese eine schnelle Umrüstbarkeit von
- Typen von Kurbelwellen,
- Mengen von Kurbelwellen,
- Maschinen und Ausrüstungen,
- Werkzeugen,
- Bearbeitungsprogrammen,
- Messeinrichtungen und Möglichkeiten zum
- Nacharbeiten von Kurbelwellen aufweisen sollen.

Sodann soll eine schnelle Umrüstbarkeit des Transports von Kurbelwellen gewährleistet sein. Schließlich soll eine Entkopplung zwischen Transport und Maschinen möglich sein. Und letztendlich soll die Fertigungslinie in bereits bestehende Produktionsanlagen integrierbar sein, um diese von Fall zu Fall flexibel zu machen.

Beim Vergleich einer an sich bekannten "linearen Verkettung von Produktionseinheiten mit einer flexiblen Fertigungslinie" gemäß der vorliegenden Erfindung, sind folgende Feststellungen treffbar. Im Hinblick auf die Werkstücke können bei der linearen Verkettung nur ähnliche Teilefamilien gefertigt werden, wohin gegen bei der flexiblen Fertigungslinie ein komplettes Spektrum von Kurbelwellen, Nockenwellen oder Steuerungswellen bearbeitet werden kann. Bei der linearen Verkettung führt eine Umrüstung zum Produktionsstillstand, während bei der flexiblen Fertigungslinie eine gleitende Umrüstung möglich ist. Die Erweiterung der Technologie ist bei der linearen Verkettung nur bedingt möglich, bei der flexiblen Fertigungslinie hingegen problemlos machbar. Bei der linearen Verkettung sind die Arbeitsfolgen starr miteinander verkettet. Bei der flexiblen Fertigungslinie sind sie hingegen flexibel verkettet. Bei der linearen Verkettung ist eine Kapazitätserweiterung nur bedingt möglich, während sie bei der flexiblen Fertigungslinie modular ausbaubar ist. Einzelne Fertigungszellen der flexiblen Fertigungslinie sind freizügig angeordnet, was den Produktionsablauf fast chaotisch erscheinen lassen kann.

Eine flexible Fertigungslinie kann prinzipiell wie folgt beschrieben werden:
- Beim Werkstücktransport sind Entkopplungsmodule vorgesehen.
- Es liegt ein modulares Bearbeitungskonzept mit Teilepuffern vor.
- Eine flexible Umstellung der Maschinen und Ausrüstungen innerhalb der Anlage ist gegeben.
- Ebenso ist die flexible Umstellung der Mess- und Rechnertechnik möglich.

Demgegenüber werden lineare Verkettungslinien durch folgende Gegebenheiten begrenzt:
- Im Hinblick auf die Werkstücke können nur ähnliche Teilefamilien gefertigt werden.
- Bei der Umrüstung von einem Werkstücktyp auf den anderen erfolgt Produktionsstillstand.
- Eine Erweiterung der Fertigungstechnologie ist nur begrenzt möglich.
- Die Arbeitsfolgen sind starr miteinander verkettet.
- Eine Kapazitätserweiterung ist nur bedingt möglich.

Die der Erfindung zu Grunde liegende Aufgabe wird durch folgende Merkmale gelöst:
- Die gesamte Fertigungslinie ist in mehrere unterschiedliche Fertigungszellen unterteilt, die jeweils
- eine Aufnahme- und Übergabeeinrichtung (Verschiebetisch) für Werkstückträger von der bzw. zurück zur Fertigungslinie aufweisen, der jeweils
- wenigstens eine Produktionseinheit in Form einer Maschine oder bei mehreren Maschinen solche des gleichen Typs oder auch unterschiedliche Typen von Maschinen zugeordnet ist zum Durchführen einer vorbestimmten Bearbeitungsoperation bzw. mehrerer Bearbeitungsoperationen an einem einzelnen Werkstück
- und ein Förderer für einzelne Werkstückträger vorgesehen ist, der einzelne Aufnahme- und Übergabeeinrichtungen (Verschiebetische) von Fertigungszellen miteinander verbindet.

Unter einer Fertigungszelle wird demnach ein Maschinenportal mit einer beliebigen Anzahl von dahintergeschalteten Maschinen zum Durchführen von Bearbeitungsoperationen verstanden. Aber auch mehrere Maschinenportale mit mehreren Maschinen können jeweils zu einer flexiblen Fertigungszelle zusammen gefasst sein.

Vorteilhaft ist es, wenn jeder Fertigungszelle noch ein Speicher für eine geringe Anzahl von Werkstückträgern zugeordnet ist. Hierdurch erhält man einen Zwischenpuffer, um Unterschiede in der Taktzeit oder Kapazität der Fertigungszelle gegenüber anderen Fertigungszellen ausgleichen zu können. Auch der Zwischenspeicher ist flexibel und wird dort angeordnet, wo es der Werkstückfluss erfordert.

Zum Ausgleich von großen Unterschieden zwischen den Taktzeiten oder den Fertigungskapazitäten kann zwischen einzelnen Fertigungszellen ein weiterer Speicher für eine größere Anzahl von Werkstückträgern angelegt sein. Diese Anlage ist so ausgerüstet, dass ein Speicher, welcher sich zwischen zwei Fertigungszellen befindet, von zwei unterschiedlichen Förderern für Werkstückträger bedient werden kann. Als Förderer haben sich Linear- oder Mehrachsportale (gantries) oder das Regalbediengerät herausgebildet, wie es bereits aus der eingangs zitierten deutschen Patentanmeldung bekannt ist. Die Förderer sind gegenseitig verriegelbar, sodass sich zum selben Zeitpunkt immer nur ein Förderer am selben Ort befinden kann.

Auch im vorliegenden Fall ist der Werkstückträger als Palette ausgebildet, der zur gleichzeitigen Aufnahme von mehreren Werkstücken vorgesehen und darüber hinaus mit einer maschinenlesbaren Adresse versehen ist. Eine Besonderheit der Werkstückträger besteht darin, dass sie, obwohl in ihren äußeren Abmessungen gleich, eine Aufnahmeeinrichtung in der Form von Prismen aufweisen, die auf dem Werkstückträger verschiebbar sind, wodurch der Werkstückträger an unterschiedliche Typen und Größen von Kurbelwellen anpassbar wird.

Zur Überbrückung von räumlichen Gegebenheiten kann zwischen einzelnen Förderern ein Übersetzer für Werkstückträger vorgesehen sein, welcher die Werkstückträger von einem Förderer übernimmt und an einen anderen Förderer übergibt.

Wie bereits erwähnt, ist die flexible Fertigungslinie für die gleichzeitige Bearbeitung von unterschiedlichen Typen von Kurbelwellen für kleine bis mittelgroße Verbrennungsmotoren vorgesehen. Als Kurbelwellen unterschiedlichen Typs gelten beispielsweise Vier-Zylinder-Pkw-Kurbelwellen sowie V6-, V8- oder V10-Kurbelwellen, letztere auch in Split-Pin-Ausführung. Kurbelwellen dieser Art haben eine Länge, welche bis zu 800 mm reichen kann, einen Flugkreis von bis zu 250 mm und ein Teilegewicht von bis zu 45 kg. Die zu bearbeitenden und gleichzeitig nebeneinander bearbeitbaren Kurbelwellen reichen von 3 bis 10-Zylinder-Verbrennungsmotoren. Infolge der Typenvielfalt können sich die Taktzeiten "beissen", d.h. überschneiden. Durch die örtliche Entkopplung an den Fertigungszellen bzw. Produktionseinheiten können auch derartige Engpässe beseitigt werden.

Nachfolgend wird die Erfindung an mehreren Ausführungsbeispielen näher beschrieben.

Es zeigen die
- Fig. 1 eine 10-Zylinder-Kurbelwelle in Split-Pin Ausführung,
- Fig. 2 und 3 eine schematische Übersicht über die möglichen Bearbeitungsoperationen,
- Fig. 4 ein erstes Layout einer Kurbelwellenfertigungsanlage,
- Fig. 5 eine Aufnahme- und Übergabeeinrichtung in Seitenansicht und

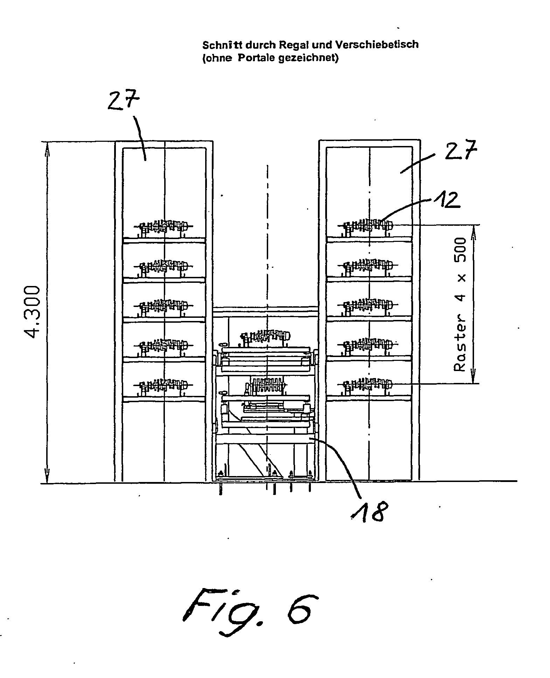

- Fig. 6 die Aufnahme- und Übergabeeinrichtung der Fig. 5 in der Vorderansicht,
- Fig. 7 ein zweites Layout einer flexiblen Kurbelwellenfertigungsanlage.

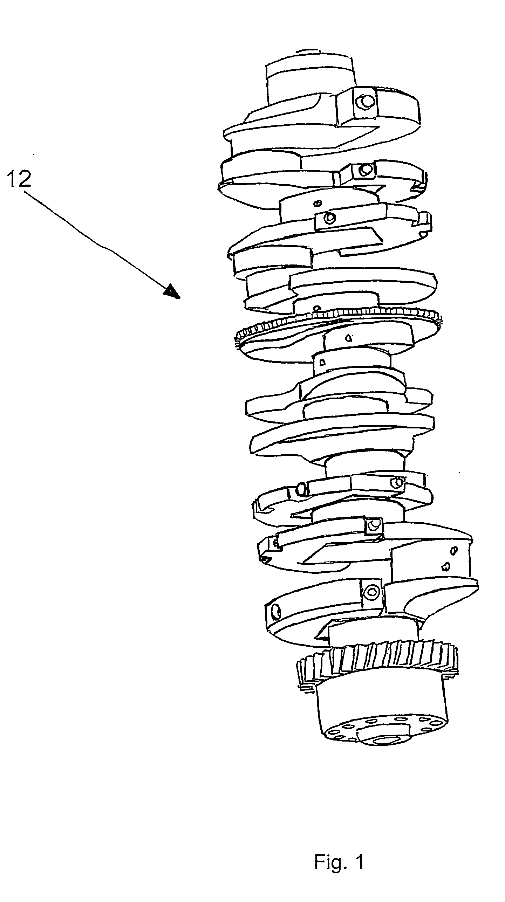

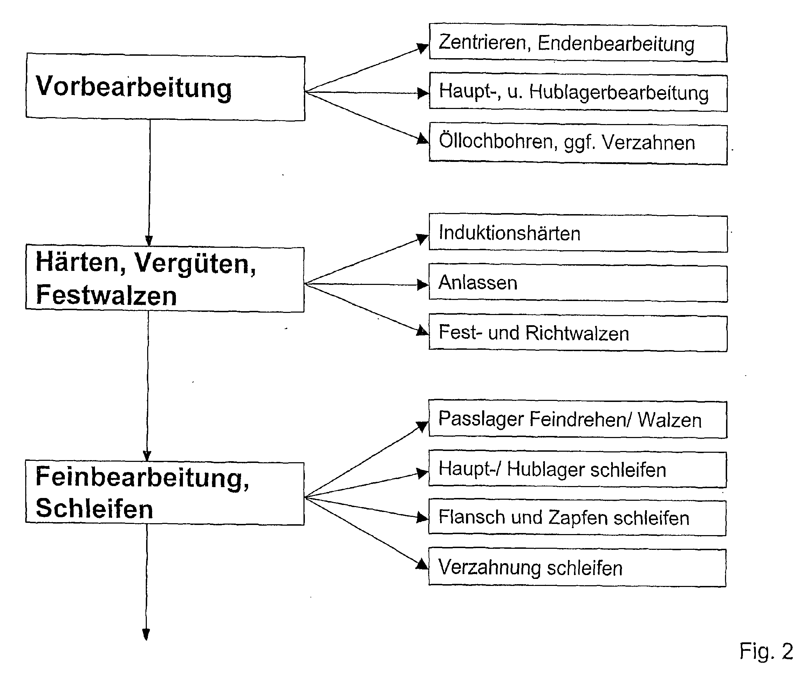

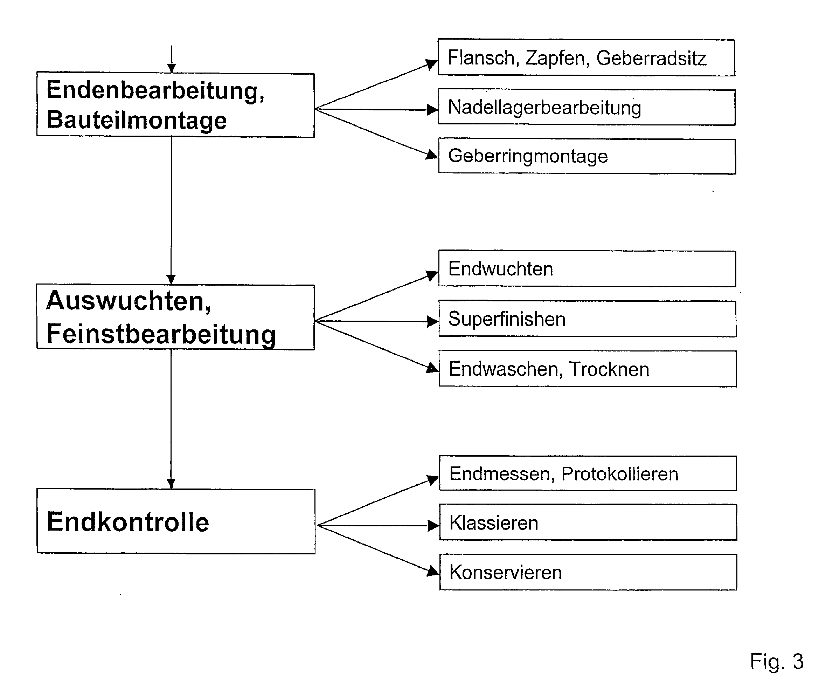

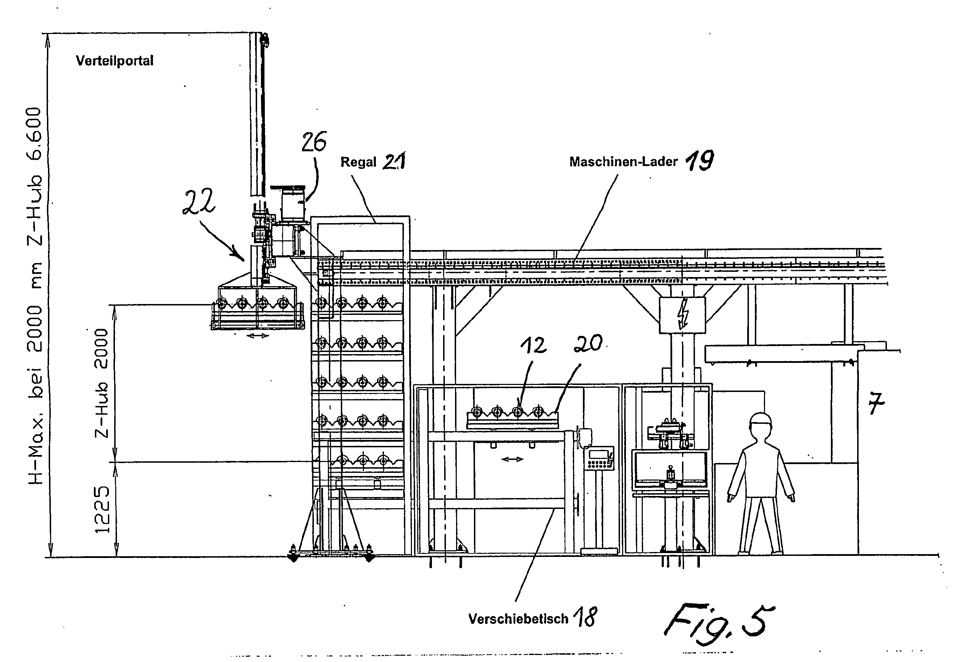

An der Kurbelwelle 12 der Fig. 1 werden nacheinander die Bearbeitungsoperationen, wie sie in den Fig. 2 und 3 aufgeführt sind, vorgenommen. Die Abfolge der einzelnen Bearbeitungsoperationen ist in der rechten Spalte der Übersicht der Fig. 2 und 3 aufgeführt. Die Einzelbearbeiturigsoperationen 10 bis 320 werden in den jeweils dafür vorgesehenen Fertigungszellen 1 bis 4 vorgenommen. Beispielsweise besteht die gesamte Vorbearbeitung der Kurbelwelle 12 aus den Operationen Zentrieren, Endenbearbeitung, Haupt- und Hublagerbearbeitung sowie Öl-Loch-Bohren und ggfs. Verzahnen. Diese Vorbearbeitung ist beispielsweise in der Fertigungszelle 1 angesiedelt. Während der gesamten Vorbearbeitung in der Fertigungszelle 1 folgt die Kurbelwelle 12 dem Richtungspfeil 6. Dabei durchläuft die Kurbelwelle 12 eine oder mehrere der Produktionseinheiten 7 bis 11. Jede Produktionseinheit 7 bis 11 besteht aus einem Wechseltisch 18, einem Maschinenportal 19 (Figur 5) und mindestens einer Maschine 7, nämlich zum Zentrieren, zur Endenbearbeitung, zur Haupt- und Hublagerbearbeitung oder zum Öl-Loch-Bohren sowie ggfs. zum Verzahnen der Kurbelwelle 12. Am Ort der Übergabe zwischen dem Transfer 26 und der Produktionseinheit 7 bis 11 ist jeweils ein Wechseltisch 18 als Übergabevorrichtung für Werkstückträger 20 zwischen den Linearportalen 19 und 26 vorgesehen.

Einzelnen Produktionseinheiten 7 bis 11 sind nach Bedarf auch jeweils Messplätze oder -einrichtungen (nicht gezeigt) zugeordnet, wo das Bearbeitungsergebnis kontrolliert wird, bevor die Kurbelwelle 12 an eine der Aufnahme- und Übergabeeinrichtungen 13 bis 17 abgegeben wird, die jeweils als Wechseltisch 18 ausgebildet sind. Im Sinne der vorliegenden-Beschreibung gehört zu jeder Produktionseinheit 7 bis 11 unbedingt auch noch ein Maschinenportal 19, wie es in der Fig. 5 als Maschinenlader bezeichnet ist. Das Maschinenportal 19 entnimmt einzelne Kurbelwellen 12 von der Palette 20, die auf dem Verschiebetisch 18 bereit liegt. Der Verschiebetisch 18 wiederum ist jeweils ein Teil einer Aufnahme- und Übergabeeinrichtung 13 bis 17. Ein Querförderer (nicht gezeigt) am Maschinenportal 19 führt die entnommene Kurbelwelle 12 der Produktionseinheit 7 zu. Dort entnimmt er eine bereits bearbeitete Kurbelwelle 12 und legt sie auf die Palette 20 zurück. Vom Verschiebetisch 18 wird die Palette 20 mit bearbeiteten Kurbelwellen 12 dem Förderer 22 übergeben, der sie entweder zu einer nachfolgenden Produktionseinheit 8 bis 11 innerhalb derselben oder einer anderen Fertigungszelle 2 bis 4 bringt. Der Förderer 22 kann die Palette 20 aber auch auf einem Regalspeicher 27 ablegen, wo sie zwischengespeichert wird, bevor sie der nächstfolgenden Produktionseinheit 8 bis 11 oder einer Fertigungszelle 2 bis 4 zugeführt wird. Der Förderer 22 kann die Palette 20 bei Bedarf auch schwenken oder drehen und erstreckt sich entlang der gesamten Fertigungszelle 1.

Nach Beendigung der Bearbeitungsoperationen in der Fertigungszelle 1 wird das Werkstück vom Förderer 22 einem Übersetzer 23 übergeben, der es in Richtung des Pfeils 24 zur Bearbeitungszelle 2 bringt. Die Fertigungszellen 1 und 2 ebenso wie die Fertigungszellen 3 und 4 sind durch eine Werkstraße 25 voneinander getrennt. Zur Überbrückung der Werkstraße 25 sind wie zwischen den Fertigungszellen 1 und 2 mehrere Übersetzer 23 vorgesehen.

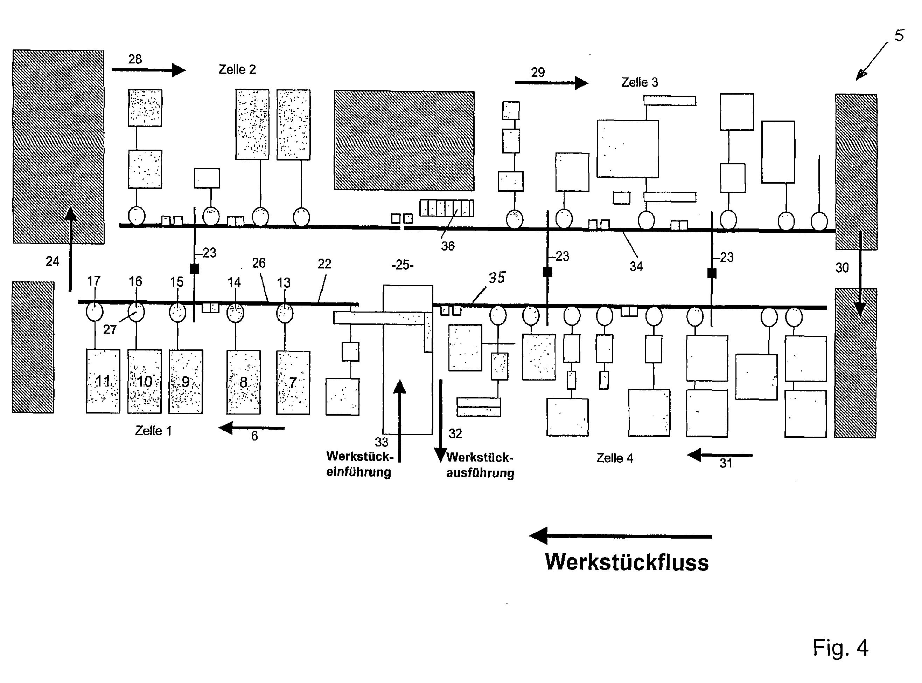

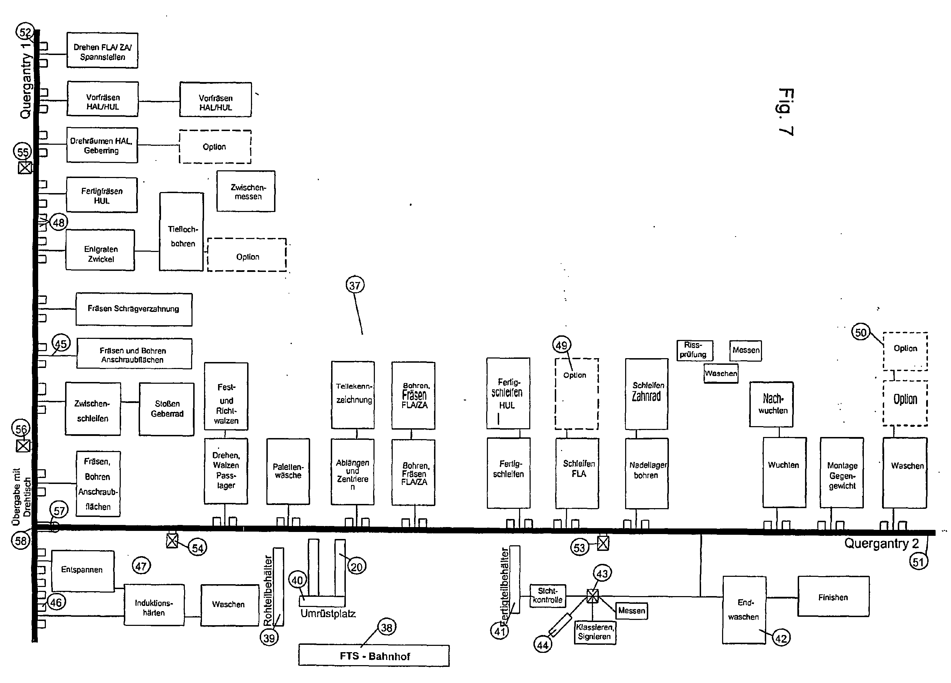

Das Layout der Fertigungslinie 5 entsprechend der Fig. 4 ist rein zufällig und entspricht den örtlichen Gegebenheiten. Neben der rechteckigen Anordnung der Fertigungszellen 1 bis 4 ist auch eine lineare Anordnung möglich, wo die Fertigungszellen 1 bis 4 in einer Linie liegen oder auch eine L-förmige Anordnung gemäß Fig. 7, wo eine oder mehrere der Fertigungszellen 1, 2, 3 oder 4 den einen Schenkel des L's und die übrigen Fertigungszellen 2, 3 und 4 den anderen Schenkel des L's bilden.

Der Förderer 22 bewegt sich längs einem Linearportal (gantry) 26, an welchem alle Produktionseinheiten 7 bis 11 enden. Auf dem Linearportal 26 folgt der Förderer 22 der Fertigungszelle 1 in Richtung des Pfeils 6 und umgekehrt nach dem Grundsatz, dass jede Palette 20 zu jedem Zeitpunkt erreichbar ist.

Jeder Produktionseinheit 7 bis 11 kann zusätzlich auch noch ein Regalspeicher 27 beigeordnet sein, der für die Aufnahme von einer geringen Zahl von Paletten 20 geeignet ist. Die Anordnung des Regalspeichers 27 ist beliebig und wird jeweils dort vorgesehen, wo es der Materialfluss erfordert.

Die Fertigungszellen 2, 3 und 4 sind grundsätzlich genauso aufgebaut wie die Fertigungszelle 1, die soeben beschrieben wurde. Der Materialfluss bewegt sich in Richtung der Pfeile 24, 28, 29, 30, 31 bis zum Austritt 32 der fertig bearbeiteten und der Güte nach klassifizierten Kurbelwelle 12.

Wie man in der Fig. 4 deutlich erkennen kann, beginnt der Materialfluss 6 der Fertigungszelle 1 bei der Werkstückeinführung 33 und endet in Höhe der Produktionseinheit 11. Über die Werkstraße 25 hinweg liegt dem Förderer 22 der Förderer 34 gegenüber, der sich über beide Fertigungszellen 2 und 3 erstreckt. Auf den Förderer 34 folgt schließlich in Richtung des Pfeils 30 der Förderer 35, der bis zum Ende der Fertigungszelle 4 führt. Auf der halben Länge des Förderers 34 ist beispielsweise noch ein Speicherregal 36 vorgesehen, wo eine größere Anzahl von Paletten 20, die aus der Fertigungszelle 1 und/oder 2 kommen, zwischengelagert werden kann, bevor sie in die Fertigungszelle 3 übergehen. Wie bereits erwähnt ist das Layout der Fertigungslinie 5 nicht auf die Darstellung beschränkt, wie sie in der Fig. 4 wiedergegeben ist. Jedenfalls sind daneben auch noch andere Layouts einer Fertigungslinie möglich. Das Wesentliche an der Fertigungslinie 5 ist die zellenspezifische Entkopplung des gesamten Fertigungsprozesses, wodurch eine besonders hohe Flexibilität der Fertigungslinie 5 im Hinblick auf die Fertigungsfolgen, die Fertigungszeiten, die Umrüstbarkeit und die Anordnung der Fertigungszellen 1 bis 4 möglich wird. Die Anordnung der Fertigungszellen 1 bis 4 ist freizügig. Getreu der eingangs gegebenen Definition kann jede Fertigungszelle 1 bis 4 auch aus einer einzelnen Produktionseinheit 7, 8, 9, 10 oder 11 bestehen.

Die Fig. 7 zeigt das L-förmige Layout einer Fertigungslinie 37. Über die Rampe 38 werden unbearbeitete Kurbelwellen 12 in Behältern 39 des Herstellers angeliefert. Am Eingang 40 der Fertigungslinie 37 werden die angelieferten Kurbelwellen 12 zunächst den Behältern 39 entnommen und auf Paletten 20 abgelegt. Die Losgröße reicht von einer einzelnen Kurbelwelle 12 bis hin zu mehreren Tausenden. Ein Loswechsel ist innerhalb von vorgegebenen Zeitabschnitten möglich.

Während der Entnahme aus dem Behälter 39 und dem Ablegen auf einer Palette 20 wird jede Kurbelwelle 12 mit einem individuellen Identifikationsmerkmal, beispielsweise einem Strichkode (nicht gezeigt) versehen, den sie während des gesamten Beareitungsablaufs beibehält. Anhand dieses Identifikationsmerkmals kann die Kurbelwelle zu jeder Zeit, in jeder Fertigungszelle der Fertigungslinie 37 geortet werden. Aus dem namenlosen Rohteil am Eingang 40 der Fertigungslinie 37 wird mit Hilfe des Identifikationsmerkmals eine identifizierbare Kurbelwelle 12. Die interne Signierung (hier konkret Data Matrix Code) wird besonders dann zur Identifizierung benutzt, wenn das Werkstück die flexible Fertigungslinie 5 verlässt (z.B. zur Vermessung, Nacharbeit, Verschrottung, ...) oder in die flexible Fertigungslinie 5 via SPC-Schublade 45 (SPC = Statistic Process Control) zurückgeführt wird. Die Teileverfolgung erfolgt über mit der Palette fest verbundene Datenträger (Schreib-/Lesechips), Schreibleseköpfen am Systemeingang, den Quergantries und den Wechseltischen sowie den Nacharbeitsplätzen für Paletten und der Zuordnung der Werkstücknummer zu einer Fertigungszelle 1, 2, 3 oder 4 durch die Steuerung (nicht gezeigt).

In der letzten Produktionseinheit 42 wird die fertig bearbeitete Kurbelwelle 12 gewaschen, gespült, vakuumgetrocknet und gekühlt. Am Endroboter 43, zwischen den Produktionseinheiten 41 und 42 wird die fertige Kurbelwelle 12 lasersigniert und vermessen. Kurbelwellen 12, die nicht in Ordnung sein sollten, verlassen die Fertigungslinie 37 über einen NIO-Förderer 44 (NIO = Nicht in Ordnung), sofern sie nicht schon früher an einer der zahlreichen SPC-Schubladen 45 aus dem Bearbeitungsprozess herausgenommen wurden. Beim Lasersignieren werden auch die für den Kunden relevanten Klassierungs- und Qualitätsmerkmale per Data Matrix Code auf dem Werkstück dauerhaft verankert, die im Verbauort wieder ausgelesen werden können.

Bemerkenswert an der Fertigungslinie 37 ist eine Anhäufung von Zwischenspeichern 46 im Bereich der Härterei 47. Das Härten und Vergüten erfordert annähernd die längsten Taktzeiten. Die vorgegebene Kontinuität des Materialflusses wird an dieser Stelle durch die erhöhte Anzahl von Zwischenspeichern 46 gewährleistet. Das Härten erfordert tatsächlich lange, jedoch nicht die längsten Taktzeiten in der flexiblen Fertigungslinie 5. Diesen Part nimmt z.B. das Fräsen der Gegengewichtsflächen bei einer V10PD Kurbelwelle 12 ein. Die erforderliche hohe Anzahl an Zwischenspeichern beim Härten resultiert vorrangig aus der Tatsache, dass der Anlassofen beim Anlauf eine Vielzahl von Werkstücken aufnimmt, ohne welche abzugeben und somit Leerpaletten produziert werden. Im Umkehrschluss müssen bei Losende genügend Leerpaletten zur Verfügung stehen, um den Ofen leerfahren zu können.

Weitere Zwischenspeicher 48 sind zwischen den Bearbeitungsoperationen 60, Fertigfräsen und Entgraten Zwickel 80, angelegt. Die Zwischenspeicher 48 nehmen solche Kurbelwellen 12 auf, bei denen eine Nacharbeit erforderlich wurde. Die Nacharbeit kann sodann in die Fertigungspausen gelegt werden, während die Fertigungslinie 37 nicht produziert. An den Zwischenspeichern 48 können bei Bedarf ganze Paletten 20 aus der Fertigungslinie 37 entnommen werden.

Eine weitere Besonderheit der Fertigungslinie ist z.B. an der Stelle 49 zu verzeichnen, wo die Möglichkeit zum Aufstellen von einer weiteren Maschine 50 als Option vorgesehen ist. Ansonsten ist jedes Linearportal 51 und 52 der Fertigungslinie 37 mit jeweils zwei Förderern 53 und 54 bzw. 55 und 56 bestückt und zwischen den Linearportalen 51 und 52 ist als Verbindung ein Übersetzer 57 mit Drehtisch 58 vorgesehen.

Die Fertigungslinie 37 wird nach dem FIFO-Prinzip betrieben, welches besagt: "First In - First Out".

## Patentansprüche

1. Fertigungslinie (5) zum Bearbeiten von gleichartigen Werkstücken, insbesondere Kurbelwellen (12), in mehreren Bearbeitungsoperationen, wobei wenigstens ein Werkstück (12) eines Typs, nachdem es, während einer Werkstückeinführung (33) in die Fertigungslinie (5), mit einem individuellen Identifikationsmerkmal versehen und auf einem adressierbaren Werkstückträger (20) abgelegt wurde, die Fertigungslinie (5) in einer Fertigungsrichtung (6, 24, 28, 29, 30, 31) durchläuft und nach der Bearbeitung über eine Werkstückausführung (32) wieder verläßt,
**dadurch gekennzeichnet, dass**
- die gesamte Fertigungslinie (5) in mehrere unterschiedliche Fertigungszellen (1 bis 4) unterteilt ist, denen jeweils
- wenigstens eine Produktionseinheit (7, 8, 9, 10, 11) zugeordnet ist, die aus einem Wechseltisch (18), einem Maschinenportal (19) und einer Maschine (7) zum Durchführen von vorbestimmten Bearbeitungsoperationen am Werkstück (12) besteht und
- längs der Fertigungsrichtung (6, 24, 28, 29, 30, 31) an jeder Fertigungszelle (1 bis 4) jeweils
- ein Förderer (22, 34, 35) für einzelne Werkstückträger (20) vorgesehen ist,
- der sich längs einem Linearportal (26) bewegt, an welchem die Produktionseinheiten (7, 8, 9, 10, 11) enden und der die Wechseltische (18) der Fertigungszellen (1 bis 4) miteinander verbindet.

2. Fertigungslinie nach Anspruch 1,
**dadurch gekennzeichnet,**
**dass** wenigstens einer Fertigungszelle (1 bis 4) wenigstens ein Speicherregal (36) für Werkstückträger (20) beigeordnet ist, der von wenigstens einem Förderer (22, 34, 35) bedienbar ist.

3. Fertigungslinie nach Anspruch 1 oder 2,
**dadurch gekennzeichnet,**
**dass** wenigstens einer Produktionseinheit (7 bis 11) wenigstens ein Speicher (27) für Werkstückträger (20) beigeordnet ist, der vom Förderer (22, 34, 35) der zugehörigen Fertigungszelle (1 bis 4) bedienbar ist.

4. Fertigungslinie nach einem der Ansprüche 1 bis 3,
**dadurch gekennzeichnet,**
**dass** der Förderer (22, 34, 35) als Linearportal (gantry) (26) oder als Regalbediengerät ausgebildet ist.

5. Fertigungslinie nach Anspruch 1,
**dadurch gekennzeichnet,**
**dass** der Werkstückträger (20) als Palette ausgebildet ist, die mit einer maschinenlesbaren Adresse versehen und an die Art und Größe von werkstücken (12) anpassbar ist, die unterschiedliche Abmessungen haben.

6. Fertigungslinie nach Anspruch 1,
**dadurch gekennzeichnet,**
**dass** einzelne Förderer (22, 34, 35) durch einen Übersetzer (23) für Werkstückträger (20) miteinander verbunden sind.

7. Fertigungslinie nach Anspruch 1,
**dadurch gekennzeichnet,**
**dass** die Fertigungslinie (5) für die gleichzeitige Bearbeitung von unterschiedlichen Typen von Kurbelwellen (12) für kleine bis mittelgroße Verbrennungsmotoren vorgesehen ist.

8. Fertigungslinie nach Anspruch 7,
**dadurch gekennzeichnet,**
**dass** die Fertigungslinie (5) für die gleichzeitige Bearbeitung von unterschiedlichen Mengen von unterschiedlichen Typen von Kurbelwellen (12) vorgesehen ist.

## Claims

1. Production line (5) for processing workpieces of the same kind, particularly crankshafts (12), in a plurality of processing operations, at least one workpiece (12) of a type, after having been provided with an identifying mark and placed on an addressable workpiece carrier (20) during an introduction (33) of the workpiece onto the production line (5), passing through the production line (5) in a production direction (6, 24, 28, 29, 30, 31) and, after processing, leaving again via a workpiece outlet (32), **characterized in that**
- the entire production line (5) is divided into a plurality of different production cells (1 to 4), to which, in each case,
- at least one production unit (7, 8, 9, 10, 11) is assigned, which consists of a changeover table (18), a machine portal (19) and a machine (7) for carrying out predetermined processing operations on the workpiece (12), and
- in each case, along the production direction (6, 24, 28, 29, 30, 31), on each production cell (1 to 4),
- a conveyor (22, 34, 35) is provided for individual workpiece carriers (20),
- which conveyor moves along a linear gantry (26) on which the production units (7, 8, 9, 10, 11) end and which conveyor connects the changeover table (18) of the production cells (1 to 4) with one another.

2. Production line according to Claim 1, **characterized in that** at least one storage shelving unit (36) for workpiece carriers (20), which can be served by at least one conveyor (22, 34, 35), is assigned to at least one production cell (1 to 4).

3. Production line according to Claim 1 or 2, **characterized in that** at least one storage space (27) for workpiece carriers (20), which can be served by the conveyor (22, 34, 35) of the associated production cell (1 to 4), is assigned to at least one production unit (7 to 11).

4. Production line according to one of Claims 1 to 3, **characterized in that** the conveyor (22, 34, 35) is configured as a linear gantry (gantry) (26) or as a storage and retrieval machine.

5. Production line according to Claim 1, **characterized in that** the workpiece carrier (20) is configured as a palette which is provided with a machine-readable address and can be adjusted to the type and size of workpieces (12) which have different dimensions.

6. Production line according to Claim 1, **characterized in that** individual conveyors (22, 34, 35) are connected with one another by a transfer device (23) for workpiece carriers (20).

7. Production line according to Claim 1, **characterized in that** the production line (5) is provided for the simultaneous processing of different types of crankshafts (12) for small to middle-sized combustion engines.

8. Production line according to Claim 7, **characterized in that** the production line (5) is provided for the simultaneous processing of different quantities of different types of crankshafts (12).

## Revendications

1. Ligne de fabrication (5) pour l'usinage de pièces du même type, en particulier des vilebrequins (12), en plusieurs opérations d'usinage, au moins une pièce (12) d'un type passant dans la ligne de fabrication (5) dans un sens de fabrication (6, 24, 28, 29, 30, 31) après qu'elle ait été dotée, pendant une introduction de pièce (33) dans la ligne de fabrication (5), d'une caractéristique d'identification individuelle et qu'elle ait été déposée sur un support de pièce (20) adressable, et quittant à nouveau la ligne après l'usinage par une réalisation de pièce (32),
**caractérisée en ce que**
- l'ensemble de la ligne de production (5) est subdivisé en plusieurs cellules de fabrication (1 à 4) différentes, à chacune desquelles
- au moins une unité de production (7, 8, 9, 10, 11) est attribuée, qui comprend une table interchangeable (18), un portique de machine (19) et une machine (7) pour l'exécution d'opérations d'usage prédéfinies sur la pièce (12) et
- le long du sens de fabrication (6, 24, 28, 29, 30, 31) sur chaque cellule de fabrication (1 à 4) à chaque fois
- un transporteur (22, 34, 35) est prévu pour des supports de pièce (20) individuels,
- lequel transporteur se déplace le long d'un portique linéaire (26), sur lequel les unités de production (7, 8, 9, 10, 11) se terminent, et qui relie les tables interchangeables (18) des cellules de fabrication (1 à 4) les unes avec les autres.

2. Ligne de fabrication selon la revendication 1,
**caractérisée en ce que**
au moins un rayonnage de stockage (36) pour supports de pièce (20), qui peut être commandé par au moins un transporteur (22, 34, 35), est attribué à au moins une cellule de fabrication (1 à 4).

3. Ligne de fabrication selon la revendication 1 ou 2,
**caractérisée en ce que**
au moins une unité de stockage (27) pour supports de pièce (20), qui peut être commandée par le transporteur (22, 34, 35) de la cellule de fabrication (1 à 4) spécifique, est attribuée à au moins une unité de production (7 à 11).

4. Ligne de fabrication selon l'une quelconque des revendications 1 à 3,
**caractérisée en ce que**
le transporteur (22, 34, 35) est réalisé sous forme de portique linéaire (gantry) (26) ou sous forme d'appareil de commande de rayonnage.

5. Ligne de fabrication selon la revendication 1,
**caractérisée en ce que**
le support de pièce (20) est conçu comme palette qui est dotée d'une adresse pouvant être lue à la machine et peut être adaptée à la nature et à la grandeur des pièces (12), qui ont différentes dimensions.

6. Ligne de fabrication selon la revendication 1,
**caractérisée en ce que**
des transporteurs (22, 34, 35) individuels sont reliés entre eux par un traducteur (23) pour supports de pièce (20).

7. Ligne de fabrication selon la revendication 1,
**caractérisée en ce que**
la ligne de fabrication (5) est prévue pour l'usinage simultané de différentes pièces de vilebrequins (12) pour des moteurs à combustion petits à moyens.

8. Ligne de fabrication selon la revendication 7,
**caractérisée en ce que** la ligne de fabrication (5) est prévue pour l'usinage simultané de différentes quantités de différents types de vilebrequin (12).
